# EUROPÄISCHE PATENTANMELDUNG

(11) **EP 1 073 005 A1**
(43) Veröffentlichungstag der Anmeldung: **31.01.2001**
(21) Anmeldenummer: 99114788.5
(22) Anmeldetag: 28.07.1999
(51) Int. Cl.: G06K 11/18, G07C 9/00

(54) **Bedienoberfläche mit einem optischen Sensor**

(71) Anmelder: SIEMENS AKTIENGESELLSCHAFT, 80333 München (DE)
(72) Erfinder: Seytter, Fritz, 81669 München (DE)

(57) **Zusammenfassung**

Die Erfindung betrifft eine Bedienoberfläche (BO) mit einem Steuerungselement (ST). Erfindungsgemäß weist das Steuerungselement (ST) eine totalreflektierende Grenzschicht (OF) auf, und daß Auswertemittel (L, SA) sind vorgesehen , die optische Veränderungen an der Grenzschicht (OF) erfassen und in Steuersignale umformen.

## Beschreibung

Die Erfindung betrifft eine Bedienoberfläche gemäß dem Oberbegriff des Patentanspruchs.

Solche Bedienoberflächen werden beispielsweise bei elektrischen oder elektronischen Geräten eingesetzt. Solche Geräte sind beispielsweise stationäre oder mobile Geräte der Datenverarbeitung oder der Kommunikationstechnik. Insbesondere bei miniaturisierten Geräten mit graphischer Bedienoberfläche, wie beispielsweise Mobiltelefonen, müssen Menüpunkte beziehungsweise Begriffe oder Symbole auf einer graphischen Oberfläche angesteuert und ausgewählt werden. Hierzu wird entweder ein Zeiger auf der Oberfläche bewegt, ähnlich wie mit einer Computermaus, oder es werden über eine Liste beziehungsweise Menü Namen oder Begriffe gescrollt, d.h. auf- und abgerollt.

Für einen solchen Auswahlvorgang werden üblicherweise mechanische Elemente verwendet, wie seitlich angebrachte Räder oder frontal montierte Walzen. Daneben werden auch sogenannte Touchpads oder druckempfindliche Sensorleisten verwendet. Diese Räder oder Sensorleisten dienen als Steuerungselemente, deren Ausgangssignale zur Bewegung des oben genannten Zeigers oder für die Scrollbewegung ausgewertet werden.

Aus der DE 41 25 198 C1 ist ein Verfahren bekannt, bei dem eine Fingerkuppe optisch abgetastet wird. Die Rillen der Fingerkuppe beziehungsweise die daraus gebildeten Daten werden zur Authentifizierung mit einem Referenzmuster verglichen.

Der Erfindung liegt die Aufgabe zugrunde, ein komfortables und mechanisch unempfindliches Steuerungselement für eine Bedienoberfläche anzugeben.

Diese Aufgabe wird erfindungsgemäß durch die im Patentanspruch angegebenen Merkmale gelöst.

Die erfindungsgemäße Bedienoberfläche kommt gänzlich ohne mechanische Elemente aus, und kann leicht in ansprechender Weise in ein Gerätedesign eingebettet werden.

Im folgenden wird die Erfindung anhand eines in der Zeichnung dargestellten Ausführungsbeispieles beschrieben. Dabei zeigen
Figur 1 das erfindungsgemäße Steuerungselement der Bedienoberfläche im Querschnitt, und
Figur 2 unterschiedliche funktionelle Zustände der erfindungsgemäßen Bedienoberfläche.

Bei der erfindungsgemäßen Bedienoberfläche wird eine total reflektierende Grenzschicht verwendet. Diese Grenzschicht wird beispielsweise durch eine glatte transparente Oberfläche gebildet, die einseitig, vorzugsweise unter einem schrägen Einfallswinkel, beleuchtet wird. Die Totalreflexion tritt ein, wenn die Oberfläche an Luft grenzt. An den Stellen der Oberfläche, an denen ein feuchter oder fettiger Gegenstand die Oberfläche berührt, bricht die Totalreflexion zusammen.

Die menschliche Fingerkuppe ist so gestaltet, daß sie normalerweise etwas feucht und/oder fettig ist, und weiter mit Riffeln bedeckt ist, die den Fingerabdruck bilden. Dieses Fingerabdruckmuster bildet dann mit der Totalreflexionstechnik ein deutlich erkennbares Muster, da zwischen den reflexstörenden, aufliegenden Riffeln immer mit Luft gefüllte Zwischenräume sind, an denen Totalreflexion auftritt.

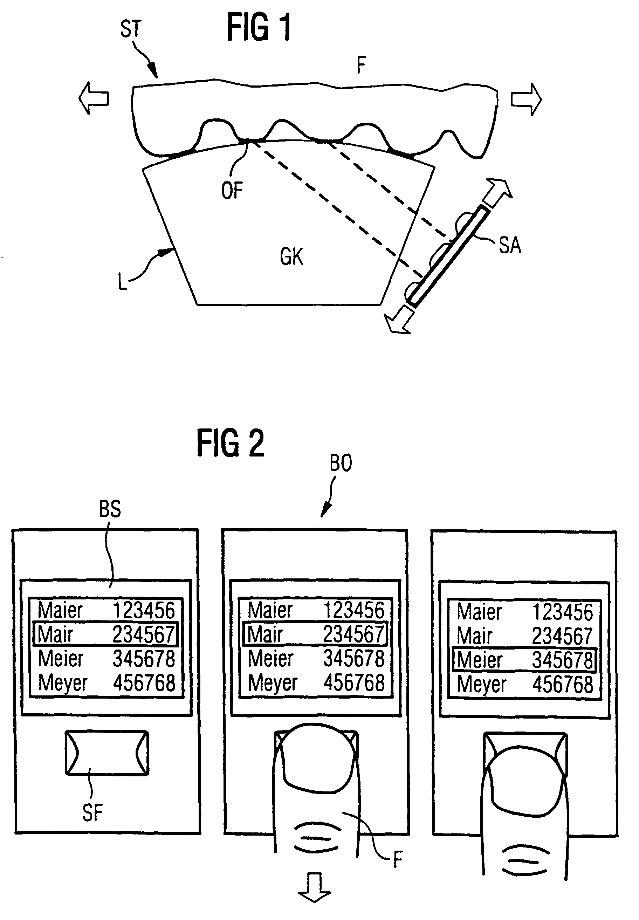

In Figur 1 ist ein Glaskörper GK dargestellt, auf dessen Oberfläche OF eine Fingerkuppe F aufliegt. Diese Oberfläche OF wird von der Innenseite des Glaskörpers GK her von einer Lichtquelle L unter einem Winkel von ca. 45 Grad beleuchtet.

Auf der der Lichtquelle L gegenüberliegenden Seite des Glaskörpers GK ist ein Sensorarray SA angeordnet, das zur Auswertung des reflektierten Lichtes dient.

Wenn die gesamte Oberfläche OF an Luft grenzt, dann wird die gesamte von der Lichtquelle L abgegebene Leistung von dem Sensorarray SA erfaßt. Das Sensorarray SA kann auch derart ausgebildet sein, daß es nur einen Ausschnitt beziehungsweise einen Teil des reflektierten Lichtbündels erfaßt wird.

Wenn die Fingerkuppe F auf der Oberfläche OF aufliegt, dann bricht die Totalreflexion an den Stellen zusammen, an denen die Riffeln der Fingerkuppe F den Glaskörper GK beziehungsweise die Oberfläche OF berühren. Die vom Sensorarray SA erfaßte Lichtmenge wird dabei reduziert.

Bei einer Bewegung der Fingerkuppe F auf der Oberfläche OF bewegt sich das von den Riffeln erzeugte Muster auch über das Sensorarray SA. Die Bewegung des Musters läßt sich elektronisch erfassen und somit eine Verschiebung des Fingers F auf der Oberfläche OF auswerten. Hierzu kann beispielsweise die Korrelationsmethode verwendet werden. Die Richtung der Bewegung und/oder die Schnelligkeit der Bewegung können dann zur Ansteuerung eines Zeigers auf der Bedienoberfläche verwendet werden.

Der Glaskörper GK bildet zusammen mit der Lichtquelle L und dem Sensorarray SA ein Steuerungselement ST, mit dem letztlich ein Zeiger (in der Figur 1 nicht dargestellt) bewegt werden kann.

In Figur 2 ist eine Bedienoberfläche BO mit einem Bildschirm BS und der erfindungsgemäß ausgebildeten Sensorfläche SF dargestellt. Durch die Bewegung des Fingers F wird in dem gezeigten Beispiel in einer Liste d.h. in den Einträgen eines Telefonbuchs ein bestimmter Eintrag gesucht.

An Stelle des Blätterns oder dem Scrollen in Einträgen kann auch ein Zeigerelement auf dem Bildschirm BS (in der Figur 2 nicht dargestellt) bewegt werden.

Mit der erfindungsgemäßen Bedienoberfläche BO können Bewegungen in jeder Richtung auf der Sensorfläche SF erfaßt und ausgewertet werden. So kann beispielsweise ein Zeiger frei auf einem Monitor positioniert werden.

## Patentansprüche

1. Bedienoberfläche (BO)
mit einem Steuerungselement (ST),
**dadurch gekennzeichnet,** daß
das Steuerungselement (ST) eine totalreflektierende Grenzschicht (OF) aufweist, und
daß Auswertemittel (L, SA) vorgesehen sind, die optische Veränderungen an der Grenzschicht (OF) erfassen und in Steuersignale umformen.
